# EUROPEAN PATENT SPECIFICATION

(11) **EP 2 192 664 B1**
(45) Date of publication and mention of the grant of the patent: **29.05.2013**
(21) Application number: 08020777.2
(22) Date of filing: 28.11.2008
(51) Int. Cl.: H02G 3/04, H02G 3/06

(54) **Genset enclosure wiring conduit**
Gensetgehäuseleitungsrohr
Conduit de câblage d'enceinte de Genset

(43) Date of publication of application: 02.06.2010
(73) Proprietor: F.G. WILSON (ENGINEERING) LIMITED, Larne BT40 1EJ (GB)
(72) Inventor: McCartney, Robert, Larne BT40 1EJ (GB)
(74) Representative: Kramer - Barske - Schmidtchen

(56) References cited:
- WO-A-01/61814
- GB-A- 1 330 888
- GB-A- 2 325 791
- US-A- 3 193 613
- US-A- 5 248 850
- US-B1- 7 193 333

## Description

### Technical Field

The present disclosure refers to a generator set ("genset") assembly comprising a base member, a combustion engine and a generator unit mounted on a base unit, a switchgear enclosure mounted to the generator, and a terminal box having a conduit connecting the interior of the terminal box with the interior of the switchgear enclosure.

The present disclosure further refers to a connecting assembly adapted to form a passage connecting the interior of a switchgear enclosure and the interior of a terminal box via a rigid conduit.

### Background

Gensets, *i.e.*, electrical power stations, wherein electrical power is generated by a generator driven by a combustion engine, generally comprise a switchgear enclosure and an assembly comprising the generator, the combustion engine, and a terminal box, mounted to the base member via elastic bearings to dampen vibrations caused by the engine. The engine may typically be a piston engine. Electric wiring may be required to connect the switchgear enclosure to the engine generator assembly. These cables may be accommodated within a passage formed by a conduit connecting the interior of the switch gear with the interior of a terminal box of the generator. The conduit may be a flexible conduit, *e.g.*, a bellows conduit, the ends of which are fixed around openings in a wall of the switch gear and in a wall of the terminal box. The flexibility of the conduit allows the conduit to withstand and absorb the relative vibrations between the engine generator unit and the switch gear. Furthermore, the conduit protects any cables, fluid passages, or other connecting elements accommodated within it.

However, flexible conduits may be undesirable because they may not be as reliable as solid conduit, they may not be as visually attractive, they may be damaged by exposure to UV rays, and may be more expensive than solid conduits. Further, they may have less desirable operating properties, such as maximum operating temperature, pressure, strength under load, etc.

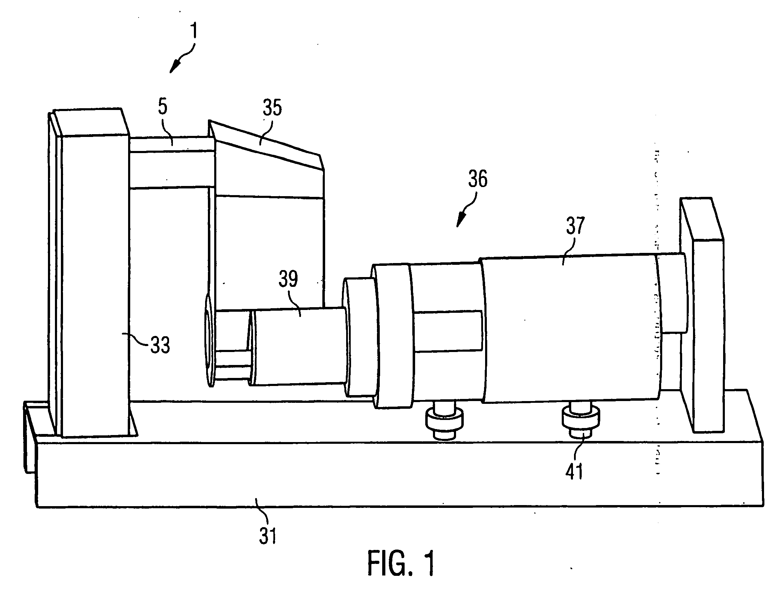

German utility models DE 20122303_U and DE 20105267_U describe a system of passing a conduit through a single wall, in which a conduit is sealed on each side of the wall with loose flanges as shown in Fig. 1 of each reference. A seal support containing a seal is placed on the conduit so that the seal is in contact with the wall. A screw thread located on an outer surface of a retaining piece engages a screw thread on the seal support. The retaining piece is fixed onto the conduit in the axial direction by a conical pressure fitting. The configuration has line seals extending into the hole in the axial direction along the outer diameter of the conduit for protection against bending forces. Because the loose flanges can move relative to the conduit, a gap may form between the conduit and the seal, and an ineffective seal may be achieved. The system may require multiple parts to be installed in the field, and thus increases the labor required for installation. Further, the system is not adaptable to be used with non-circular conduit cross-sections.

A genset assembly is discloses in US 7,193,333 B1. Here, a combustion engine is mounted on a base member. A power management system is mounted on the front side of the genset.

A joint between two electrical power enclosures according to GB 2 325 791 A comprises a flanged coupling piece secured to the enclosures by bushes screwed into its bore and in turn securing and preferably providing electric contact with conductive washers having taps for connection to a circuit-protective conductor. The flanges may have an insulating coating. The joint may be supplied as a kit.

The present disclosure is directed, at least in part, to improving or overcoming one or more disadvantages associated with the prior art.

### Summary of the Disclosure

The present disclosure relates to a genset assembly comprising a base member, a combustion engine mounted on the base member, a generator drivingly coupled with the combustion engine, a terminal box connected with the generator, a switchgear enclosure, and a connecting assembly as mentioned in the following.

According to a further aspect the present disclosure relates to a connecting assembly adapted to form a passage between a wall of a switchgear enclosure supported on a base member and a wall of a terminal box. The connecting assembly comprises a rigid conduit protruding through the openings in the walls, a first flange and a second flange at least partially surrounding a periphery of the conduit, wherein at least one flange is moveable along the conduit; a fixation device for fixing the at least one movable flange to the conduit; at least one elastic element at least partially surrounding the conduit. When mounted on the walls, the first flange is arranged in an interior of the switchgear enclosure, and the second flange is arranged in an interior of the terminal box. The at least one movable flange is fixed to the conduit at a position such that the elastic element is deformed by a biasing force between the wall and the corresponding flange.

### Brief Description of the Drawings

The accompanying drawings, which are incorporated herein and constitute part of the specification, illustrate exemplary embodiments of the disclosure and, together with the description, serve to explain the principles of the disclosure. In the drawings:

Fig. 1 is a pictoral view of a genset assembly,

Fig. 2 is a pictoral view of a connecting assembly adapted to be used on the genset assembly of Fig. 1,

Fig. 3 is a pictoral view of the connecting assembly of Fig. 2 mounted on the genset assembly of Fig. 1,

Fig. 4 is a cross-sectional view of part of an embodiment of the connecting assembly,

Fig. 5 is a cross-sectional view of part of a further embodiment of the connecting assembly,

Fig. 6 is a cross-sectional view of a further embodiment of the connecting assembly,

Fig. 7 is a a pictoral view of a flange assembly forming a portion of the connecting assembly of Figs. 2-6 and 8-9,

Fig. 8 is a cross-sectional view of an embodiment of the connecting assembly, and

Fig. 9 is a cross-sectional view of a further embodiment of the connecting assembly.

Fig. 10 is a pictoral view of an alternative configuration for the elastic element 10 of the conduit assembly of Fig. 2.

Fig. 11 is a cross-sectional view of a portion of the elastic element 10 of Fig. 11.

Fig. 12 is a cross.sectional view of the elastic element 10 of Fig. 10 as part of the connecting assembly.

### Detailed Description

Exemplary embodiments of a system and method for passing wiring or fluid material between the interior of a switchgear enclosure (33) and a terminal box (35) located on a generator (39) that is drivingly coupled to a combustion engine (37) and mounted on a base member (31) are described herein with reference to Figs. 1-9. The same reference numerals are used for corresponding elements.

Referring to Fig. 1, a conduit 5 may extend between a generator terminal box 35 and a switchgear enclosure 33 of a genset unit 36. The switchgear enclosure 33 may accommodate switches for controlling the operation of the the genset unit 36, which comprises a combustion engine 37 and a generator 39. Further, it may accommodate circuitry and switches to supply different voltages to the outside.

The genset unit 36 includes the terminal box 35, which is connected to the switchgear enclosure 33 via several electrical lines, *e.g.*, wiring. The genset unit 36 may be fixed to a base member 31 via dampening elements 41, *e.g.*, elastic bearings, to dampen the transfer of vibrations caused by engine 37 to base member 31. The switchgear enclosure 33 may be directly mounted to the assembly base 31, so that the generator terminal box 35 may vibrate relative to the switchgear enclosure 33.

A connecting assembly 1 may comprise a conduit 5, which forms a passage accommodating, for example, electric lines and other equipment, and connects the interior of the switchgear enclosure 33 to the terminal box 35. The electric lines as well as the interiors of the switchgear enclosure 33 and the terminal box 35 are protected against environmental influences, such as dust, humidity, and other foreign particles.

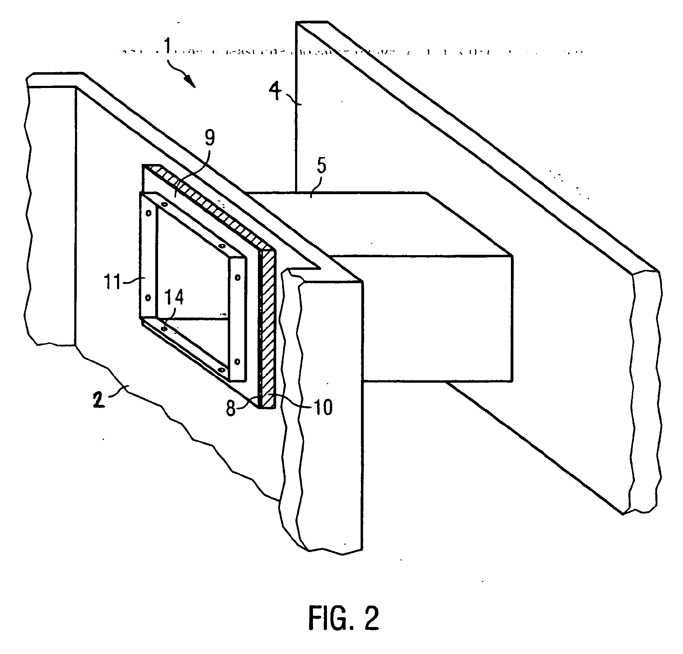

As discussed further with respect to Figs. 2-9, the conduit 5 may be a rigid conduit having flanges fixed thereto and pressed against the walls of the generator terminal box 35 and the switchgear enclosure 33. At least one elastic element 10 is located between one of the flanges and one of the walls so that the elastic element 10 deforms in response to axial forces and is able to absorb vibrations originating from the combustion engine 37.

The elastic elements 10 may be pre-installed onto the inner face of the flanges 8,12, or, alternatively, the sealing plates may be installed in the field as a separate part. Providing the elastic elements 10 pre-installed on the flanges 8,12 may provide the advantage that the number of parts needed to assemble the connecting assembly system 1 is reduced. Alternatively, providing the sealing plate 10 separately from the flanges 8,12 may provide the advantage that the thickness and material properties of the elastic elements 10 may be chosen by the field technician to be appropriate to the application for which it is installed.

This system uses a small number of parts, and may provide for efficient field installation. Further, the parts may be separable and therefore may be interchangeable for installation for different applications, conduit sizes, and axial movement allowances.

Because solid conduits may be more reliable, cheaper, easier to install, and may have advantageous operating properties over a flexible conduit, the system provides an improved method of forming a conduit passage between two distance walls subject to vibrations.

Fig. 2 is a perspective view showing the connecting assembly 1 mounted on walls 2, 4. Wall 2 may be a wall of the terminal box 35, and wall 4 may be a wall of the switchgear enclosure 33. The system comprises the solid conduit 5, a first flange 8 fixed to the conduit 5 at its left side end region, a second flange 12 fixed to the conduit 5 at its right side end region and elastic elements 10 being provided at the sides of the flanges 8 and 12 facing towards each other. First flange 8 comprises a radial portion 9, the faces of which are directed perpendicular to the lengthwise direction of conduit 5, and an axial portion 11, the faces of which are parallel to the lengthwise direction of conduit 5. Axial portion 11 may be formed with bolt hole(s) 14 for fixing first flange 8 to conduit 5 in a manner described later.

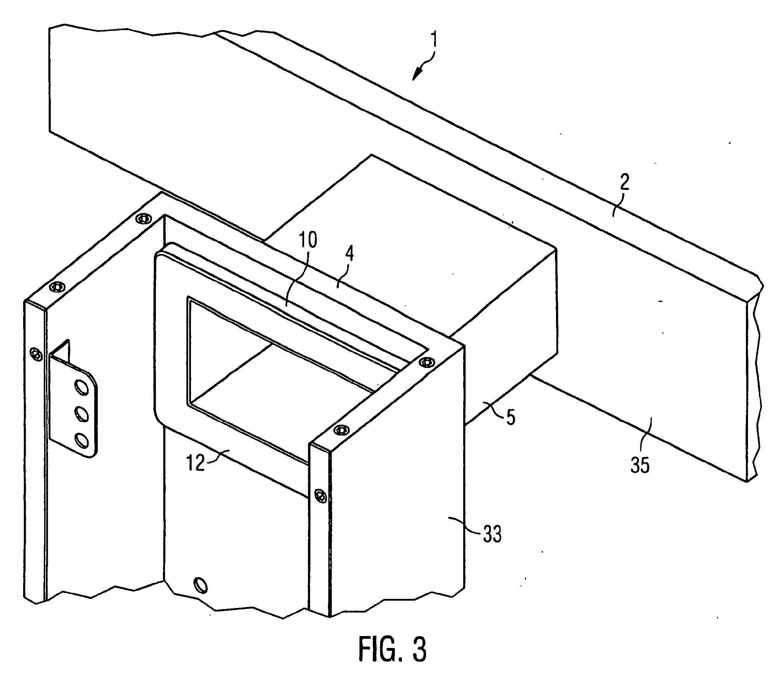

Fig. 3 shows the connecting assembly 1 assembled with the switchgear enclosure 33 and the generator terminal box 35, wherein connecting assembly 1 as shown in Fig. 2 is seen in Fig. 3 from the reverse perspective, i.e., a view of the opposite flange 12.

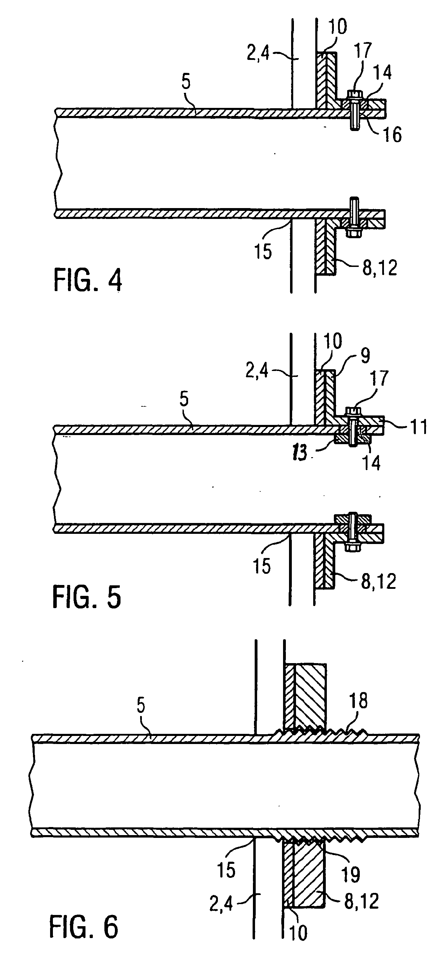

According to Fig. 3, conduit 5 is inserted through an opening in a wall 2 of the terminal box 35 and an opening in a wall 4 of switchgear enclosure 33. Second flange 12 may be unitarily formed with conduit 5 by press-forming, soldering, welding, molding, press-fitting or similar. An elastic element 10 is located between second flange 12 and wall 4. The design of the end region of conduit 5, which is located within the terminal box 35 and ca not be seen in Fig. 3, will be described with respect to Figs. 4 to 7.

According to Fig. 4, conduit 5 is inserted through opening 15 in wall 2. An end portion of conduit 5 is formed with screw holes 16. Flange 8 is formed at its axial portion 11 with elongated bolt holes 14. A screw bolt 17, which protrudes through bolt hole 14 is screwed into screw hole 16 and tightened, so that flange 8 is fixed to conduit 5 by tightening screw bolt 17. When screw bolt 17 is not tightened, flange 8 is slidably movable along conduit 5 with the movability defined by the axial length of elongated bolt hole 14. Elastic element 10 is located between the radial portion 9 of flange 8 and wall 2.

One screw bolt 17 with corresponding hole may be sufficient to attach the flange 12 to the conduit 5, for instance in the case of a close fit between the inner circumference of axial portion 11 of flange 8 and the outer circumference of conduit 5. Normally, a plurality of screw bolts with corresponding holds is provided along a circumference of the conduit 5.

The embodiment of Fig. 5 differs from the embodiment of Fig. 4 in that bolt hole 14 is not an elongated hole but is formed with a diameter corresponding to the shaft of screw bolt 17. Bolt hole 14 in conduit 5 is formed as an elongated hole with its elongation in a axial direction of conduit 5. Screw bolt 17 is tightened by screwing it into a nut 13 provided inside conduit 5.

Fig. 6 discloses an embodiment in which least a portion of the outside of conduit 5 has a circular cross-section having a screw thread 18, and the inner surface of flange 8, formed as an annular ring, has a corresponding screw thread 19. By turning flange 8 around conduit 5, flange 8 is movable relative to conduit 5 in its lengthwise direction.

In the embodiments of Figs. 4 -7, the cross section of conduit 5 may be of any shape. The cross section may also change along the length of the conduit.

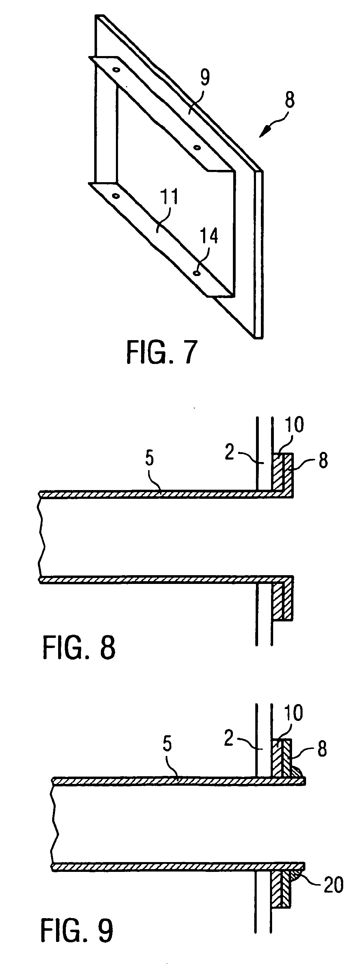

Fig. 7 shows an embodiment of a flange 8 wherein the radial portion 9 fully surrounds the periphery of conduit 5, while the axial portion 11 is formed at less than the entire periphery of the conduit 5, for example only at an upper side and a lower side of conduit 5, which may have a rectangular cross-section. Further, the radial portion 9 may encompass less than the entire periphery of the conduit.

The movable attachments of flange 8 to conduit 5 as described above may be modified, e.g., by providing elongated holes in the axial portion 11 of flange 8 and conduit 5 or according to other methods known in the art, as long as flange 8 can be moved along conduit 5 and fixed in a desired position. Furthermore, the fixation means as explained with respect to Figs. 4-7 above can be used at both ends of conduit 5, i.e. also for flange 12.

Fig. 8 discloses an embodiment, where flange 8 (or flange 12) is formed unitarily with conduit 5, e.g., by bending wall of flange 5 at its end in a radially outward direction, or by molding the flange 8 and conduit as a unitary piece.

Fig. 9 discloses an embodiment, wherein flange 8 is formed to completely surround the periphery of conduit 5, and is fixed to conduit 5 by a solder 20. Of course, the flange 8 maybe fixed to the conduit 5 via many methods.

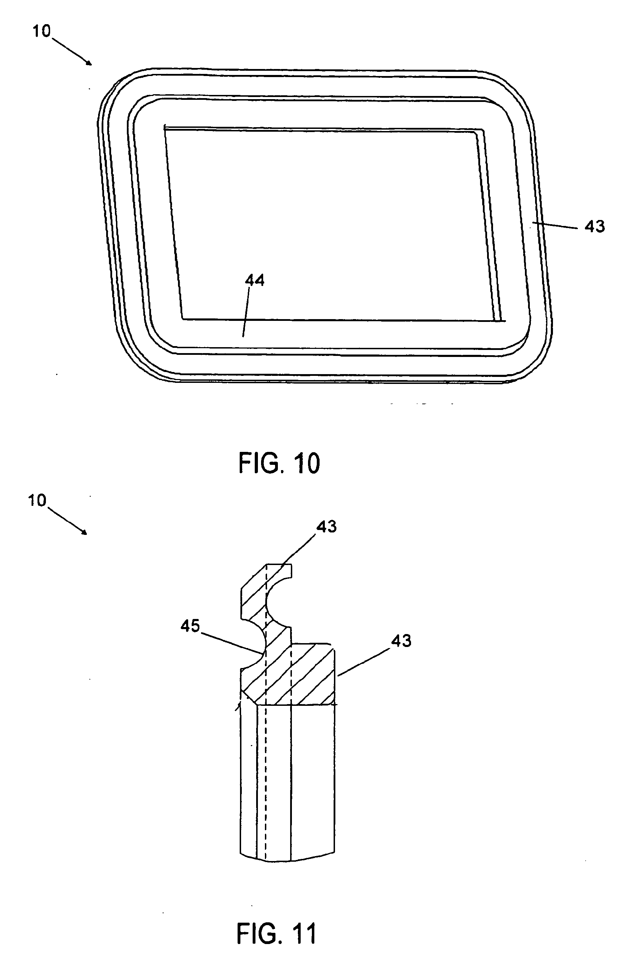

Referring to Fig. 10, an alternative embodiment of an elastic element 10 is shown. Elastic element 10 has a vertical portion 43 and a horizontal portion 44. The vertical portion 43 has smaller outer dimension than the horizontal portion 44. The horizontal and vertical portions 43, 44 may be coextruded or comolded together, or, alternatively, may be formed of separate pieces coupled together by methods known in the art. Further, horizontal and vertical portions 43, 44 may be composed of materials having the same hardness, alternatively, the horizontal and vertical portions may be composed of materials having different hardness properties, selected to optimize vibration reduction as discussed below.

Referring to Fig. 11, a cross-sectional view of the elastic element 10 of Fig. 10 is shown. The vertical portion 43 may have scallops 45 located on one or more surfaces of the vertical portion 43. The scallops 45 may be located around the entire perimeter of the vertical portion 43, or, alternatively, may be located on only a portion of the vertical portion 43. For example, the scallops may ideally be located in the corners of the vertical portion 43.

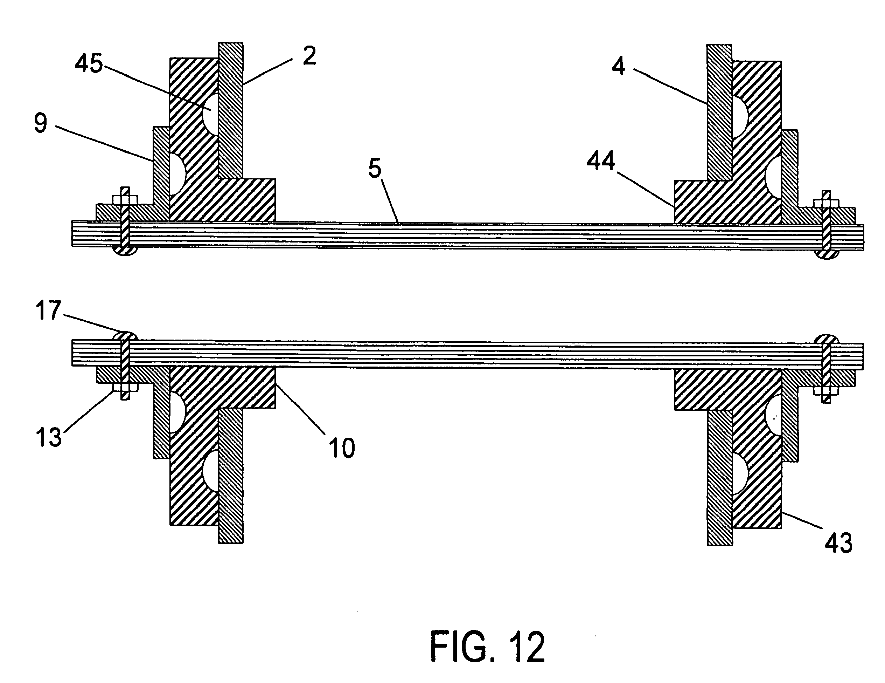

Referring to Fig. 12, a cross-sectional view of the connecting assembly 1 with the elastic element 10 of Fig. 10 is shown. The horizontal portion 44 of the elastic element 10 is located between the conduit 5 and the wall 2,4. Scallops 45 may be located on both the flange 8,12 side of the elastic element 10 and the wall 2,4 side of the elastic element 10.

### Industrial Applicability

The system as described may be used for forming a passage between two compartments, e.g. a switchgear enclosure 33 and a terminal box 35.

Referring to Fig. 3 mounting of the system is as follows:

Conduit 5 may be inserted through an opening of wall 4 and an opening of wall 2, wherein advantageously but not necessarily the shape of the openings closely fit to the shape of the conduit 5. The openings may be different sizes and shapes, and the conduit 5 may have a varying cross section along its length.

In one of the flanges is fixably connected to conduit 5, an elastic element 10 may be placed onto conduit 5 adjacent to the fixed flange before it is inserted into the wall openings, so that when conduit 5 is inserted, elastic element 10 is located between the flange 12 and wall 4. A second elastic element 10 may then be placed on the end portion of conduit 5 protruding through wall 2 and a flange 8 (see e.g. Fig. 4) may be placed on the conduit 5 and fixed to conduit 5 at a position such that the elastic elements 10 are somewhat deformed by pressing the flanges against the walls. With the embodiment of Fig. 6, such pressure can be simply generated by turning flange 8 relative to conduit 5. With the embodiments of Fig. 4 and 5, flange 8 should be moved relative to conduit 5 until elastic element 10 is slightly deformed, and the screw bolts 17 tightened.

If elastic elements 10 at both walls 2 and 4 completely surround conduit 5, and planar sections 9 of both flanges 8 and 12 completely surround conduit 5, the elastic elements 10 may provide a seal that seals the space between walls 2 and 4 from the spaces at the opposed sides of walls 2 and 4, e.g. the interior of the switchgear enclosure 33 and the terminal box 35. Furthermore, wall 2 can vibrate or move relative to wall 4 without the breaking the seal, because the elasticity of elastic elements 10 may absorb the vibration. Conduit 5 may not be deformed by these vibrations, because the walls can move relative to conduit 5. Therefore, conduit 5 may be formed from a solid material, e.g. plastic, metal, or a similar material.

If flanges similar to those shown in Figs. 4 to 6 are used at both ends of conduit 5, conduit 5 can be inserted through walls 2 and 4 and elastic elements 10 and flanges 8, 12 may be mounted afterward.

When a seal is not necessary, only one elastic element may be used and, furthermore, the elastic element is not required to completely surround conduit 5.

Elastic element 10 may comprise any elastic or resilient material, as elastomeric foam, rubber, etc. The elasticity, deformability, and thickness of elastic element 10 are selected according to the special needs and circumstances, in which the elastic member 10 will be installed, e.g. temperature range, environmental conditions, amplitude, frequency of vibrations, etc. The elastic element 10 may be composed of a pliable material such as rubber, paper, silicone, metal, cork, neoprene, fiberglass, or a plastic polymer. For example, the elastic elements 10 may be formed of a material having a Shore hardness ratio of 30-70, preferably 40-60, and even more preferably 45-55. For instance, a material having a Shore hardness ratio of 50 is known to have beneficial properties. For instance, the hardness of the material may be selected in order to allow the elastic element to withstand shearing forces due to the weight of the conduit 5 and its contents while running, and also to have sufficient elasticity to absorb the vibrational forces.

Further, as described with respect to Figs. 4-5, using bolts to secure one or more flanges 8, 12 to the conduit provides the advantage that the system 1 may be disassembled by removing the bolts. Having elongated holes on the conduit 5 or on the flange 8, 12 provides the advantage that the conduit may be installed in a range of locations along the longitudinal axis of the conduit 5.

Further, the conduit sealing system 1 provides the advantage that one or more of the flanges 8,12 may be removably attached or nonremoveably attached. Removable attachment of the flanges 8,12 may provide the advantage that the system may be disassembled for service or repair. Nonremovable attachment may provide the advantage of quick, secure, and permanent installation.

As described with respect to Fig. 6, the flange 8, 12 and the elastic element 10 may be rotated into the desired position, and the screwthread 17, 19 may hold the flange 8, 12 in position. This configuration may provide the advantage that the conduit may be installed at any desired length, and the flange 8, 12 may be attached at any position on the conduit 6.

Further, as described with respect to Fig. 7, a flange axial portion 11 that extends around less than the entire periphery of the opening of the flange 8, 12 may provide the advantage of easier and quicker installation when the flange 8, 12 can be adequately fixed to the conduit 5 by fixing the flange on less than the entire periphery.

The configurations of Figs. 8-9, in which one flange 8, 12 is fixedly attached to the conduit 5 before being installed in the field, may provide the advantage of quicker field installation because the field technician is only required to install one side of the system 1.

The configuration of Figs. 10-12 shows an elastic element 10 having horizontal and vertical portions 43,44. The flat side of the vertical portion 43 is disposed against the flange 8, 12 when installed over the conduit 5. The horizontal portion 44 may be disposed between the conduit 5, and the wall 2,4 through which the conduit 5 is passed. This configuration may provide advantageous results in vibration dampening. By disposing the horizontal portion 44 of the elastic element 10 between the conduit 5 and the walls 2,4 there is provided the advantage that the elastic element 10 can absorb vibrational forces in the vertical direction. A further advantage is that disposing the elastic element 10 of Fig. 10 between the conduit 5 and the wall 2,4 may allow for higher tolerances for the dimensions of the conduits and openings in the walls 2,4.

The scallops 45 on the vertical portion 43 of the elastic element 10 provide increased elastic response of the elastic element 10 in the areas where the scallops 45 are located. As stated above, the elastic element 10 may be formed of a material sufficiently hard to withstand the shearing forces of the weight of the conduit 5 and its contents. However, to provide sufficient vibration dampening, the elastic element must deform in response to the vibrations. Therefore, placing scallops 45 filled with air or another substance on the vertical portion 43 may increase the deformation range of the elastic element 10 in the area of the scallops for a given applied force. Further, it may be advantageous to locate the scallops 45 at the corners of the elastic element 10, which may support less weight of the conduit 5 and its contents in relation to other portions of the elastic element 10, and which may desirable to have increased deflection in response to vibrational forces in the horizontal and axial directions.

The system 1 may be incorporated for use with a conduit enclosing wiring or a fluid. Depending on the application, different sizes of conduits 5 and flanges 8, 12 may be used. Further, different methods of fixing either of the flanges 8, 12 to the conduit may be employed. Finally, the system 1 may be employed for a variety of applications, such as passing the conduit through walls, or between different types of equipment enclosures.

For applications in which the conduit 5 undergoes vibration and displacement loads, the thickness and the material properties of the elastic element 10 may be modified so that the assembly allows more or less axial movement of the conduit 5.

The system 1 may provide advantages that a small number of parts are required to install the system. Further, the parts may be separable and therefore may be interchangeable for installation for different applications, conduit sizes, and axial movement allowances.

Further, the system 1 provides the advantage that one or both of the flanges 8, 12 may be removably attached or nonremoveably attached. Removable attachment of the flanges 8, 12 may provide the advantage that the system may be disassembled for service or repair. Nonremovable attachment may provide the advantage of quick, secure, and permanent installation.

The elastic elements 10 may be pre-installed onto the inner face of the flanges 8, 12, or, alternatively, the elastic elements may be installed in the field as a separate part. Providing the elastic elements 10 pre-installed onto the flanges 8, 12 may provide the advantage that the number of parts needed to assemble the system 1 is reduced. Alternatively, providing the elastic element 10 separately from the flanges 8, 12 may provide the advantage that the thickness and material properties of the elastic element 10 may be chosen by the field technician to be appropriate to the application for which it is installed.

Further, because the system 1 provides for axial displacement of the conduit, a solid conduit may be used, providing a more attractive appearance than that of a flexible conduit.

The system as described or modified may be used for various applications in which it is desirable to provide a simple and reliable conduit system for passing a conduit through two distant walls, wherein the walls may vibrate or move relative to each other. Conduit 5 may also be used as a conduit for directly guiding fluids flowing within the conduit 5. End regions of the conduit may be distant from the walls, so that the flanges 8, 12 are mounted adjacent to the walls at an intermediate portion of conduit 5.

## Claims

1. A connecting assembly (1) adapted to form a passage between a wall (4) of a switchgear enclosure (33) supported on a base member (31) and a wall (2) of a terminal box (35), comprising:
- a rigid conduit (5) adapted to protrude through openings in the walls (2, 4),
- a first flange (8) at least partially surrounding a periphery of the conduit (5), the first flange (8) being adapted to be arranged in an interior of the switchgear enclosure (33) when mounted on the wall (4) of the switchgear enclosure (33);
- a second flange (12) at least partially surrounding a periphery of the conduit (5), the second flange (12) being adapted to be arranged in an interior of the terminal box (35) when mounted on the wall (4) of the terminal box (35);
- at least one elastic element (10) at least partially surrounding the conduit(5);
wherein at least one of the first and second flanges (8, 12) is moveable along the conduit (5), and the at least one movable flange (8, 12) is fixed to the conduit (5) by a fixation device (13, 17, 18, 19) at a position such that the elastic element (10) is deformed by a biasing force between the wall (2,4) and the corresponding flange (8,12).

2. A genset assembly comprising:
- a base member (31),
- a combustion engine (37) mounted on the base member (31),
- a generator (39) drivingly coupled with the combustion engine (37),
- a terminal box (35) connected with the generator (39),
- a switchgear enclosure (33), and
- a connecting assembly (1) according to claim 1.

3. The genset assembly according to claim 2, wherein
- the first flange (8) is arranged adjacent to a wall (4) of the switchgear enclosure (33),
- the second flange (12) is arranged adjacent to a wall (2) of the terminal box (35)
- the at least one elastic element (10) is arranged between at least one of the flanges (8, 12) and the corresponding wall (2,4), and
- the at least one movable flange (8, 12) is fixed to the conduit (5) at a position such that the elastic element (10) is deformed by a biasing force between the wall (2,4) and the corresponding flange (8,12).

4. The genset assembly of claims 2 or 3, wherein
- the at least one movable flange (8, 12) comprises an axial part (11) extending parallel to the outer periphery of the conduit (5), and
- the fixation device (13, 17, 18, 19) fixes the axial part (11) to the conduit (5).

5. The genset assembly according to claim 4, further comprising:
at least one hole (14, 16) in the axial part (11) and the conduit (5), wherein the fixation device (13, 17, 18, 19) comprises a bolt (17) adapted to pass through the hole (14, 16) to fix the flange (8, 12) to the conduit (5) by being tightened.

6. The genset assembly according to claim 2, further comprising:
- a screw thread (19) located on the inner periphery of at least one flange (8);
- a screw thread (18) located on the outer periphery of the conduit (5);
wherein the at least one movable flange (8, 12) is movable along the conduit (5) by being rotated on the conduit with the screw threads (18, 19) in engagement.

7. The genset assembly according to any of claims 2-6, wherein both flanges (8, 12) are fixable to the conduit (5).

8. The genset assembly according to any of claims 2 to 6, wherein at least one flange (8, 12) is formed unitary with the conduit (5), preferably by soldering at least one flange (8) is soldered onto the conduit (5). molded onto the conduit (5), press fitting at least one flange (8,12) onto the conduit (5), and molding at least one flange unitarily with the conduit (5).

9. The genset assembly according to any of claims 2-5 and 7-8, the elastic element (10) comprising:
- a vertical portion (43) adapted to be disposed between the flange (8,12) and its respective wall (2,4) and
- a horizontal portion (44) adapted to be disposed between the periphery of the conduit (5) and an opening in the respective wall (2,4).

10. The genset assembly according to any of claims 2-5 and 7-9, wherein the elastic element (10) further comprises:
- at least one scallop (45) located on a portion of the elastic element (10), wherein an area surrounding the at least one scallop (45) is adapted to contact one of the wall (2,4) and the flange (8,12).

11. The genset assembly according to claim 10, wherein the conduit (5), the elastic element (10), and the flange (8,12) are rectangular, and wherein a plurality of scallops (45) are located at each corner of the rectangular elastic element (8).

12. The genset assembly according to any of claims 2 to 11, wherein elastic elements (10) are arranged between each of the flanges (8, 12) and the corresponding wall (2, 4).

13. The genset assembly according to any of claims 2 to 12, wherein at least one elastic element (10) is adapted to surround the periphery of conduit (5), thereby forming a seal between the at least one flange (8, 12) and the corresponding wall (2,4).

14. The genset assembly according to any of claims 2 to 13, wherein the at least one elastic element (10) is fixed to the corresponding flange (8, 12).

## Patentansprüche

1. Verbindungsanordnung (1), die dazu angepasst ist, einen Durchgang zwischen einer Wand (4) eines von einem Grundelement (31) getragenen Schaltkasten (33) und einer Wand (2) eines Verteilerkastens (35) zu bilden, mit:
- einem starren Kanal (5), der dazu angepasst ist, durch Öffnungen in den Wänden (2, 4) hervorzustehen,
- einem ersten Flansch (8), der wenigstens teilweise einen Umfang des Kanals (5) umgibt, wobei der erste Flansch (8) dazu angepasst ist, im Inneren des Schaltkastens (33) angeordnet zu sein, wenn dieser an der Wand (4) des Schaltkastens (33) befestigt ist,
- einem zweiten Flansch (12), der wenigstens teilweise einen Umfang des Kanals (5) umgibt, wobei der zweite Flansch (12) dazu angepasst ist, im Inneren des Verteilerkastens (35) angeordnet zu sein, wenn dieser an der Wand (4) des Verteilerkastens (35) befestigt ist,
- wenigstens einem elastischen Element (10), das wenigstens teilweise den Kanal (5) umgibt,
wobei der erste und/oder zweite Flansch (8, 12) entlang des Kanals (5) beweglich ist und wobei der wenigstens eine bewegliche Flansch (8, 12) an dem Kanal (5) durch eine Befestigungsvorrichtung (13, 17, 18, 19) an einer Position befestigt ist, so dass das elastische Element (10) durch eine Vorspannkraft zwischen der Wand (2, 4) und dem entsprechenden Flansch (8, 12) verformt wird.

2. Generatorsatzanordnung mit:
- einem Grundelement (31),
- einer auf dem Grundelement (31) befestigten Verbrennungskraftmaschine (37),
- einem antreibend mit der Verbrennungskraftmaschine (37) verbundenen Generator (39),
- einem mit dem Generator (39) verbundenen Verteilerkasten (35),
- einem Schaltkasten (33), und
- einer Verbindungsanordnung (1) nach Anspruch 1.

3. Generatorsatzanordnung nach Anspruch 2, wobei
- der erste Flansch (8) benachbart einer Wand (4) des Schaltkastens (33) angeordnet ist,
- der zweite Flansch (12) benachbart einer Wand (2) des Verteilerkastens (35) angeordnet ist,
- das wenigstens eine elastische Element (10) zwischen wenigstens einem der Flansche (8, 12) und der entsprechenden Wand (2, 4) angeordnet ist, und
- der wenigstens eine bewegliche Flansch (8, 12) an dem Kanal (5) an einer Position angeordnet ist, so dass das elastische Element (10) durch eine Vorspannkraft zwischen der Wand (2, 4) und dem entsprechenden Flansch (8, 12) verformt wird.

4. Generatorsatzanordnung nach Anspruch 2 oder 3, wobei
- der wenigstens eine bewegliche Flansch (8, 12) einen axialen Abschnitt (11) aufweist, der sich parallel zum Außenumfang des Kanals (5) erstreckt, und
- die Befestigungsvorrichtung (13, 17, 18, 19) den axialen Abschnitt (11) an dem Kanal (5) befestigt.

5. Generatorsatzanordnung nach Anspruch 4, ferner mit:
wenigstens einem Loch (14, 16) in dem axialen Abschnitt (11) und dem Kanal (5), wobei die Befestigungsvorrichtung (13, 17, 18, 19) eine Schraube (17) aufweist, die dazu angepasst ist, durch das Loch (14, 16) zum Befestigen des Flansches (8, 12) an dem Kanal (5) durch Festziehen zu verlaufen.

6. Generatorsatzanordnung nach Anspruch 2, ferner mit:
- einem an einem Innenumfang von wenigstens einem Flansch (8) angeordneten Schraubengewinde (12),
- einem am Außenumfang des Kanals (5) angeordneten Schraubengewinde (18), wobei der wenigstens eine bewegliche Flansch (8, 12) entlang des Kanals (5) beweglich ist, indem er an dem Kanal gedreht wird, während die Schraubengewinde (18, 19) miteinander in Eingriff sind.

7. Generatorsatzanordnung nach einem der Ansprüche 2 bis 6, wobei beide Flansche (8, 12) an dem Kanal (5) befestigbar sind.

8. Generatorsatzanordnung nach einem der Ansprüche 2 bis 6, wobei wenigstens ein Flansch (8, 12) einteilig mit dem Kanal (5) gebildet ist, bevorzugt durch Löten, wobei der wenigstens eine Flansch (8) an den Kanal (5) gelötet ist, an den Kanal (5) angegossen ist, formschlüssig mit dem Kanal (5) verbunden ist und wobei der wenigstens eine Flansch einteilig mit dem Kanal (5) gegossen ist.

9. Generatorsatzanordnung nach einem der Ansprüche 2 bis 5 und 7 bis 8, wobei das elastische Element (10) aufweist:
- einen vertikalen Abschnitt (43), der dazu angepasst ist, zwischen dem Flansch (8, 12) und seiner jeweiligen Wand (2, 4) angeordnet zu sein, und
- einen horizontalen Abschnitt (44), der dazu angepasst ist, zwischen dem Umfang des Kanals (5) und einer Öffnung in der jeweiligen Wand (2, 4) angeordnet zu sein.

10. Generatorsatzanordnung nach einem der Ansprüche 2 bis 5 und 7 bis 9, wobei das elastische Element (10) ferner aufweist:
- wenigstens einen an einem Abschnitt des elastischen Elements (10) angeordnet Bogenausschnitt (45), wobei ein wenigstens einen Bogenausschnitt (45) umgebender Bereich dazu angepasst ist, die Wand (2, 4) oder den Flansch (8, 12) zu berühren.

11. Generatorsatzanordnung nach Anspruch 10, wobei der Kanal (5), das elastische Element (10) und der Flansch (8, 12) rechteckig sind und wobei eine Mehrzahl von Bogenausschnitten (45) an jeder Ecke des rechteckigen elastischen Elements (8) angeordnet ist.

12. Generatorsatzanordnung nach einem der Ansprüche 2 bis 11, wobei elastische Elemente (10) zwischen jedem der Flansche (8, 12) und der entsprechenden Wand (2, 4) angeordnet sind.

13. Generatorsatzanordnung nach einem der Ansprüche 2 bis 12, wobei wenigstens ein elastisches Element (10) dazu angepasst ist, den Umfang des Kanals (5) zu umgeben, wodurch eine Dichtung zwischen dem wenigstens einen Flansch (8, 12) und der entsprechenden Wand (2, 4) ausgebildet wird.

14. Generatorsatzanordnung nach einem der Ansprüche 2 bis 13, wobei das wenigstens eine elastische Element (10) an dem entsprechenden Flansch (8, 12) befestigt ist.

## Revendications

1. Ensemble de connexion (1) adapté pour former un passage entre une paroi (4) d'une enceinte d'appareillage de commutation (33) supporté sur un élément de base (31) et une paroi (2) d'une boîte de jonction (35) comprenant :
- un conduit rigide (5) adapté pour faire saillie par des ouvertures dans les parois (2, 4),
- un premier collet (8) entourant au moins en partie une périphérie du conduit (5), le premier collet (8) étant adapté pour être disposé dans un intérieur de l'enceinte d'appareillage de commutation (33) quand il est monté sur la paroi (4) de l'enceinte d'appareillage de commutation (33) ;
- un deuxième collet (12) entourant au moins en partie une périphérie du conduit (5), le deuxième collet (12) étant adapté pour être disposé dans un intérieur d'une boîte de jonction (35) quand il est monté sur la paroi (4) de la boîte de jonction (35) ;
- au moins un élément élastique (10) entourant au moins en partie le conduit (5) ;
dans lequel au moins un des premier et deuxième collets (8, 12) est mobile le long du conduit (5), et ledit au moins un collet mobile (8, 12) est fixé au conduit (5) par un dispositif de fixation (13, 17, 18, 19) dans une position telle que l'élément élastique (10) est déformé par une force de sollicitation entre la paroi (2, 4) et le collet (8, 12) correspondant.

2. Ensemble générateur comprenant :
- un élément de base (31),
- un moteur à combustion (37) monté sur l'élément de base (31);
- un générateur (39) couplé en entraînement avec le moteur à combustion (37),
- une boîte de jonction (35) connectée au générateur (39),
- une enceinte d'appareillage de commutation (33), et
- un ensemble de connexion (1) selon la revendication 1.

3. Ensemble générateur selon la revendication 2, dans lequel
- le premier collet (8) est disposé adjacent à une paroi (4) de l'enceinte de l'appareillage de commutation (33),
- le deuxième collet (12) est disposé adjacent à une paroi (2) de la boîte de jonction (35),
- ledit au moins un élément élastique (10) est disposé entre au moins un des collets (8, 12) et la paroi (2, 4) correspondante, et
- ledit au moins un collet mobile (8, 12) est fixé au conduit (5) dans une position telle que l'élément élastique (10) est déformé par une force de sollicitation entre la paroi (2, 4) et le collet (8, 12) correspondant.

4. Ensemble générateur selon la revendication 2 ou 3, dans lequel
- ledit au moins un collet mobile (8, 12) comprend une partie axiale (11) s'étendant parallèlement à la périphérie extérieure du conduit (5), et
- le dispositif de fixation (13, 17, 18, 19) fixe la partie axiale (11) au conduit (5).

5. Ensemble générateur selon la revendication 4, comprenant en outre :
au moins un trou (14, 16) dans la partie axiale (11) et le conduit (5), dans lequel le dispositif de fixation (13, 17, 18, 19) comprend un boulon (17) adapté par traverser le trou (14, 16) pour fixer le collet (8, 12) au conduit (5) en étant serré.

6. Ensemble générateur selon la revendication 2, comprenant en outre :
- un filet de vis (19) situé sur la périphérie intérieure d'au moins un collet (8) ;
- un filet de vis (18) situé sur la périphérie extérieure du conduit (5) ;
dans lequel ledit au moins un collet mobile (8, 12) peut être déplacé le long du conduit (5) en le faisant tourner sur le conduit avec les filets de vis (18, 19) en prise.

7. Ensemble générateur selon l'une quelconque des revendications 2-6, dans lequel les deux collets (8, 12) peuvent être fixés au conduit (5).

8. Ensemble générateur selon l'une quelconque des revendications 2 à 6, dans lequel au moins un collet (8, 12) est formé unitairement avec le conduit (5), de préférence par soudage au moins un collet (8) est soudé sur le conduit (5), moulé sur le conduit (5), ajustement par pressage d'au moins un collet (8, 12) sur le conduit (5), et moulage d'au moins un collet unitairement avec le conduit (5).

9. Ensemble générateur selon l'une quelconque des revendications 2-5 et 7-8, l'élément élastique (10) comprenant en outre :
- une partie verticale (43) adaptée pour être disposée entre le collet (8, 12) et sa paroi respective (2, 4), et
- une partie horizontale (44) adaptée pour être disposée entre la périphérie du conduit (5) et une ouverture dans la paroi respective (2, 4).

10. Ensemble générateur selon l'une quelconque des revendications 2-5 et 7-9, dans lequel l'élément élastique (10) comprend en outre :
- au moins une moulure (45) située sur une partie de l'élément élastique (10), dans lequel une zone entourant ladite au moins une moulure (45) est adaptée pour entrer en contact avec une de la paroi (2, 4) et du collet (8, 12).

11. Ensemble générateur selon la revendication 10, dans lequel le conduit (5), l'élément élastique (10) et le collet (8, 12) sont rectangulaires et dans lequel une pluralité de moulures (45) sont situées à chaque coin de l'élément élastique (10) rectangulaire.

12. Ensemble générateur selon l'une quelconque des revendications 2 à 11, dans lequel des éléments élastiques (10) sont disposés entre chacun des collets (8, 12) and la paroi (2, 4) correspondante.

13. Ensemble générateur selon l'une quelconque des revendications 2 à 12, dans lequel au moins un élément élastique (10) est adapté pour entourer la périphérie du conduit (5), formant ainsi un joint d'étanchéité entre ledit au moins un collet (8, 12) et la paroi (2, 4) correspondante.

14. Ensemble générateur selon l'une quelconque des revendications 2 à 13, dans lequel ledit au moins un élément élastique (10) est fixé au collet (8, 12) correspondant.
